# EUROPÄISCHE PATENTANMELDUNG

(11) **EP 1 462 215 A1**
(43) Veröffentlichungstag der Anmeldung: **29.09.2004**
(21) Anmeldenummer: 04003061.1
(22) Anmeldetag: 11.02.2004
(51) Int. Cl.: B24C 9/00, B25J 21/00

(54) **Arbeitskammer mit einer Dichteinrichtung zum Einführen eines Werkstücks mittels eines Roboterarms**

(30) Priorität: 28.03.2003 DE 10314181
(71) Anmelder: Rösler Oberflächentechnik GmbH, 96231 Bad Staffelstein (DE)
(72) Erfinder: Dangel, Matthias, 96052 Bamberg (DE)
(74) Vertreter: Manitz, Finsterwald & Partner GbR

(57) **Zusammenfassung**

Eine Arbeitskammer (12) für eine Strahlanlage weist einen Roboterarm (10) zur Manipulation eines zu strahlenden Werkstücks auf, wobei die Arbeitskammer (12) eine Kammerwand (14) mit einer Zugangsöffnung (16) zum Einführen des Roboterarms (10) besitzt. Im Bereich der Zugangsöffnung (16) ist eine Dichteinrichtung (20,30,50,70) vorgesehen, die an dem Roboterarm (10) drehbar befestigt ist.

## Beschreibung

Die vorliegende Erfindung betrifft eine Arbeitskammer für eine Strahlanlage, die mit einem Roboterarm zur Manipulation eines zu strahlenden Werkstücks zu versehen ist, wobei die Arbeitskammer eine Kammerwand mit einer Zugangsöffnung zur Einführung des Roboterarms aufweist, und wobei im Bereich der Zugangsöffnung eine Dichteinrichtung vorgesehen ist, die zwischen Roboterarm und Kammerwand abdichtet.

In einer derartigen Arbeitskammer können insbesondere kompliziert geformte Werkstücke gestrahlt werden, wobei die Werkstücke mit Hilfe des Roboterarms in die und aus der Arbeitskammer gebracht werden. Hierbei muss die Dichteinrichtung dafür sorgen, dass während des Strahlens im Bereich der Zugangsöffnung kein Strahlmittel aus der Arbeitskammer austreten kann. Bei bestimmten Anwendungen kann es dabei wünschenswert sein, den Roboterarm und damit das Werkstück während des Strahlvorgangs zu bewegen. In diesem Fall muss die Dichteinrichtung eine Bewegbarkeit des Roboterarms entlang einer oder um eine Achse ermöglichen.

Es ist die Aufgabe der vorliegenden Erfindung, eine Arbeitskammer der eingangs genannten Art dahingehend weiterzubilden, dass eine besonders kostengünstige, das heißt konstruktiv und apparativ wenig aufwändige Abdichtung zwischen Roboterarm und Arbeitskammer möglich ist.

Die Lösung dieser Aufgabe erfolgt durch die Merkmale des Anspruchs 1 und insbesondere dadurch, dass an dem Roboterarm ein Dichtelement befestigt ist, das um die Längsachse des Roboterarms drehbar ist und das bei in die Kammer eingeführten Roboterarm zwischen diesem und der Kammerwand abdichtet.

Erfindungsgemäß kann die Abdichtung zwischen Roboterarm und Kammerwand konstruktiv besonders einfach dadurch erzielt werden, dass der Roboterarm während des Strahlvorgangs mit dem daran befestigten Dichtelement gegen die Kammerwand gedrückt gehalten wird, so dass eine Abdichtung gewährleistet ist und dennoch eine Rotationsbewegung des Roboterarms möglich ist, um ein gutes Strahlergebnis zu erzielen.

Erfindungsgemäß sind - mit Ausnahme des um die Längsachse des Roboterarms drehbaren Dichtelementes - keinerlei bewegte Teile erforderlich. Die erfindungsgemäße Dichteinrichtung muss nicht verriegelt oder anderweitig gekoppelt werden, so dass die Zykluszeiten beim Strahlen eines Werkstücks minimiert sind, da der Roboterarm, an dessen vorderem Ende ein zu strahlendes Werkstück befestigt ist, lediglich in die Arbeitskammer eingefahren und mit einer vorbestimmten Mindestanpresskraft gegen die Kammerwand gedrückt gehalten werden muss. Da das Dichtelement relativ zu dem Roboterarm drehbar ist, kann sich dieser auch bei an die Kammerwand angepresstem Dichtelement relativ zu letzterem drehen.

Somit lassen sich erfindungsgemäß einerseits konstruktive Einsparungen erzielen. Andererseits ist eine Minimierung der Zykluszeit möglich.

Vorteilhafte Ausführungsformen der Erfindung sind in der Beschreibung, der Zeichnung sowie den Unteransprüchen beschrieben.

Nach einer ersten vorteilhaften Ausführungsform kann das Dichtelement alleine durch Anpressen des Roboterarms gegen die Kammerwand in einen dichtenden Eingriff mit der Kammerwand bringbar sein. Bei dieser Ausführungsform wird auf jegliche Verriegelungselemente, wie beispielsweise Stellzylinder, Magnetverschlüsse oder dergleichen verzichtet, wodurch für eine Verringerung des konstruktiven Aufwands und der erzielbaren Zykluszeiten sehr gute Bedingungen geschaffen sind.

Nach einer weiteren Ausführungsform der Erfindung kann nicht nur am Roboterarm sondern auch an der Kammerwand ein Dichtelement vorgesehen sein, wobei diese beiden Dichtelemente miteinander zusammenwirken können. Grundsätzlich ist es jedoch ausreichend, wenn nur an dem Roboterarm ein Dichtelement vorgesehen ist, wobei das Dichtelement im abgedichteten Zustand mit dem Rand der Zugangsöffnung in Eingriff tritt.

Erfindungsgemäß muss das Dichtelement nicht notwendigerweise einteilig ausgebildet sein. So ist es nach einer weiteren Ausführungsform der Erfindung möglich, dass das Dichtelement zwei Teile aufweist, von denen eines fest am Roboterarm befestigt ist und das andere relativ zum einen um die Längsachse des Roboterarms drehbar ist.

Nach einer weiteren vorteilhaften Ausführungsform liegt das Dichtelement nicht nur außerhalb der Arbeitskammer an, sondern es erstreckt sich bei in die Arbeitskammer eingeführtem Roboterarm bis in das Innere der Arbeitskammer. Bei einer solchen Ausführungsform weist das Dichtelement eine Erstreckung in Längsrichtung des Roboterarms auf, wodurch eine Ausbildung möglich wird, die es ermöglicht, dass der Roboterarm während des Strahlvorgangs, das heißt im abgedichteten Zustand, nicht nur gedreht, sondern auch entlang seiner Längsachse bewegt wird. Eine solche Ausführungsform kann beispielsweise dadurch erhalten werden, dass das Dichtelement zwei Teile aufweist, die teleskopierbar sind, das heißt, die ineinander schiebbar sind, wodurch trotz einer linearen Bewegung des Roboterarms eine Abdichtung zwischen Roboterarm und Kammerwand erhalten bleibt.

Hierbei kann es weiter vorteilhaft sein, wenn das Dichtelement einen Hohlraum aufweist, der mit Ablauföffnungen für Strahlmittel versehen ist. Ein solcher Hohlraum kann beispielsweise dichtende Abschnitte, nach Art einer Labyrinthdichtung oder Lamellendichtung aufweisen.

Nach einer weiteren vorteilhaften Ausführungsform kann das Dichtelement einen Ringsteg aufweisen, der mit dem Außenumfang der Zugangsöffnung in Eingriff bringbar ist. Bei dieser Ausführungsform ist gewährleistet, dass das Dichtelement stets zentriert in der Zugangsöffnung gehalten ist, wenn das Strahlvorgang beginnt.

Nach einer weiteren vorteilhaften Ausführungsform kann zumindest ein Teil des Dichtelements relativ zu dem Roboterarm entlang dessen Längsachse verschiebbar sein, wenn das Dichtelement von dem Roboterarm gegen die Kammerwand angepresst ist. Bei dieser Ausführungsform ergibt sich eine Längsverschiebbarkeit des Roboterarms auch im abgedichteten Zustand.

Nach einer weiteren Ausbildung der Erfindung kann das Dichtelement gegen die Kraft einer Feder in Richtung der Längsachse des Roboterarms bewegbar sein. Bei dieser erfindungsgemäßen Ausbildung wird das Dichtelement durch eine Feder in Richtung der Kammerwand vorgespannt, so dass auch eine Rückzugsbewegung des Roboterarms zunächst den dichtenden Eingriff zwischen Dichtelement und Kammerwand nicht aufhebt. Erst wenn die Rückzugsbewegung des Roboterarms einen bestimmten Wert überschreitet, löst sich das Dichtelement von der Kammerwand zusammen mit dem Roboterarm.

Für eine besonders gute Abdichtung kann der Roboterarm innerhalb des Dichtelements durch eine zusätzliche Dichtung, insbesondere einen Gummibalg, geschützt sein. Auch kann es vorteilhaft sein, an der zur Arbeitskammer gerichteten Seite des Dichtelements zusätzlich ein Abstreifelement anzuordnen, so dass bei einer Rückzugsbewegung des Roboterarms und bei gleichzeitig, beispielsweise durch die Kraft einer Feder, gegen die Kammerwand gedrücktem Dichtelement eine zusätzliche Abdichtung zwischen dem Roboterarm und dem Dichtelement selbst geschaffen ist.

Nach einem weiteren Aspekt der Erfindung betrifft diese ein Verfahren zum Abdichten zwischen einer Kammerwand einer Arbeitskammer für eine Strahlanlage und einem in die Arbeitskammer durch eine Zugangsöffnung eingeführten Roboterarm, wobei an dem Roboterarm oder an der Kammerwand ein Dichtelement befestigt ist. Bei dem erfindungsgemäßen Verfahren wird zu jedem Zeitpunkt während eines Strahlvorgangs entweder der Roboterarm mit einer festgelegten Mindestanpresskraft gegen das Dichtelement gedrückt oder alternativ wird das Dichtelement von dem Roboterarm direkt oder indirekt mit dieser Mindestanpresskraft gegen die Kammerwand gedrückt, um dadurch eine Abdichtung zwischen Kammerwand und Roboterarm zu erzielen.

Mit dem erfindungsgemäßen Verfahren kann auf einfachste Weise eine Abdichtung während des Strahlvorgangs erzielt werden, indem der Roboterarm stets mit einer solchen Mindestkraft gegen die Kammerwand gedrückt wird, dass eine Abdichtung gewährleistet ist. Hierbei ist es grundsätzlich unerheblich, ob das Dichtelement an der Kammerwand oder an dem Roboterarm vorgesehen ist. Es muss lediglich gewährleistet sein, dass die dichtende Wirkung durch den Roboterarm selbst hervorgerufen wird, der mit der festgelegten Mindestanpresskraft die Dichtwirkung erzielt.

Das erfindungsgemäße Verfahren ermöglicht es, dass der Roboterarm während des Strahlvorgangs um seine Längsachse gedreht und/oder entlang seiner Längsachse bewegt wird, wobei in beiden Fällen die Dichtwirkung erhalten bleibt.

Wenn eine Dichtwirkung auch bei einer Rückzugsbewegung des Roboterarms gewährleistet sein soll, kann die Mindestanpresskraft zumindest teilweise durch die Kraft einer Feder aufgebracht werden.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine erste Ausführungsform einer Arbeitskammer;
- Fig. 2: eine zweite Ausführungsform einer Arbeitskammer;
- Fig. 3: eine dritte Ausführungsform einer Arbeitskammer; und
- Fig. 4: eine vierte Ausführungsform einer Arbeitskammer.

Nachfolgend werden verschiedene Ausführungsbeispiele der Erfindung anhand der beigefügten Figuren beschrieben, wobei für gleiche Bauteile zur vereinfachten Darstellung gleiche Bezugszeichen verwendet werden.

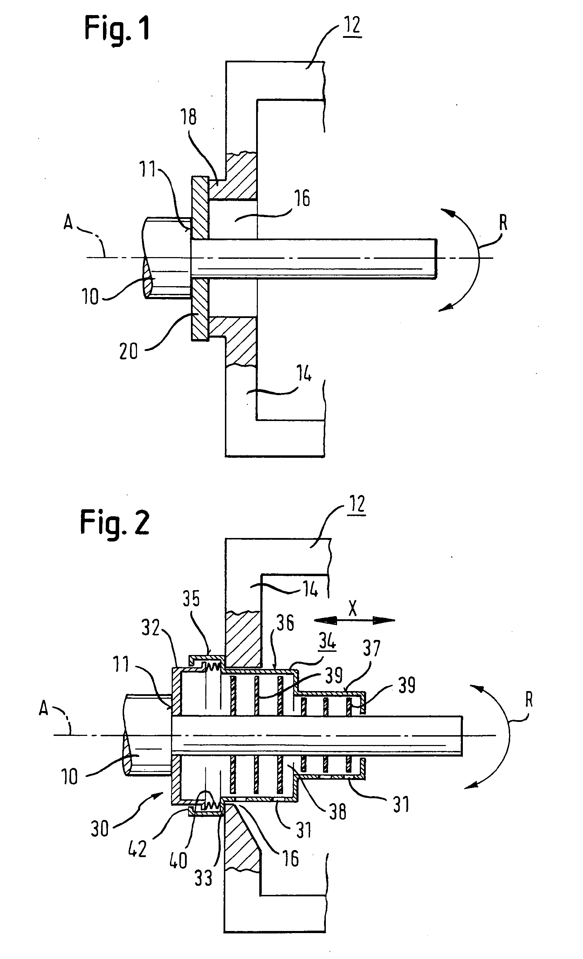

Fig. 1 zeigt eine erste Ausführungsform einer Arbeitskammer 12 für eine Strahlanlage, die mit einem Roboterarm 10 zur Manipulation eines zu strahlenden Werkstücks (nicht dargestellt) versehen ist, das am vorderen (in den Figuren rechten) Ende des Roboterarms 10 befestigt ist.

Im Rahmen der vorliegenden Erfindung wird unter der Bezeichnung "Roboterarm" jedes Teil verstanden das von einem Roboterantrieb manipulierbar ist und zur Aufnahme eines Werkstücks geeignet ist. Das heißt bei dem mit der Bezeichnung "Roboterarm" bezeichneten Bauteil kann es sich entweder um den Roboterarm selbst oder um einen an diesen angeschraubten Adapter oder dergleichen handeln.

Die außer an ihrer Vorderseite allseitig geschlossene Arbeitskammer 12 weist an ihrer Vorderseite eine Kammerwand 14 auf, die eine Zugangsöffnung 16 zum Einführen des Roboterarms 10 besitzt. Im Innern der Arbeitskammer 12 ist eine (nicht dargestellte) Strahleinrichtung vorgesehen, die Strahlmittel in einem Strahlkegel auf einen Arbeitsbereich innerhalb der Arbeitskammer 12 schleudert, in dem sich ein von dem Roboterarm gehaltenes Werkstück befindet.

Bei der in Fig. 1 dargestellten Ausführungsform ist die Kammerwand 14 im Bereich der Zugangsöffnung 16 an ihrer Außenfläche mit einem umlaufenden Gehäuseflansch 18 versehen, dessen vordere Stirnfläche zur Anlage eines Dichtelements 20 dient, das an dem Roboterarm 10 angeordnet ist.

Das Dichtelement 20 ist am Außenumfang des Roboterarms 10 befestigt und liegt an einer Stufe 11 des Roboterarms 10 an. Das Dichtelement 20 ist mit dem Roboterarm drehbar verbunden, das heißt es ist um die Längsachse A des Roboterarms drehbar, und besitzt einen Querschnitt, der größer als derjenige der Zugangsöffnung 16 ist. Beim dargestellten Ausführungsbeispiel ist der Querschnitt des Dichtelements 20 sogar noch etwas größer als die Außenabmessung des Gehäuseflansches 18, so dass gewährleistet ist, dass das Dichtelement 20 die Zugangsöffnung 16 dichtend überdeckt, wenn es von dem Roboterarm gegen die Kammerwand 14 angedrückt wird.

Bei der in Fig. 1 dargestellten Ausführungsform wird zu Beginn eines Strahlvorgangs der Roboterarm 10 zusammen mit einem Werkstück, das an dessen vorderem Ende befestigt ist, durch die Zugangsöffnung 16 in die Arbeitskammer 12 eingeführt. Anschließend wird der Roboterarm 10 mit einer vorbestimmten Mindestanpresskraft in Richtung der Kammerwand 14 gedrückt gehalten, so dass das am Roboterarm 10 befestigte Dichtelement 20 gegen den Gehäuseflansch 18 der Arbeitskammer 12 gedrückt gehalten wird. Hierdurch ist eine Abdichtung zwischen Roboterarm 10 und Kammerwand 14 gewährleistet, wobei gleichzeitig eine Rotation des Roboterarms 10 um die Achse A, das heißt entlang des Rotationswinkels R, möglich ist, da eine Drehbewegung zwischen Roboterarm 10 und Dichtelement 20 aufgrund der drehbaren Befestigung des Dichtelements 20 an dem Roboterarm 10 möglich ist. Nach Beendigung des Strahlvorgangs muss der Roboterarm 10 lediglich zurückgezogen werden, das heißt weder zum Herstellen noch zum Auflösen des dichtenden Eingriffs zwischen Roboterarm 10 und Kammerwand 14 sind weitere Maßnahmen als ein Bewegen des Roboterarmes erforderlich, da das Dichtelement 20 alleine durch Anpressen des Roboterarms 10 gegen die Kammerwand 14 in einen dichtenden Eingriff mit der Kammerwand 14 gebracht wird.

Bei der in Fig. 2 dargestellten Ausführungsform ist ein Dichtelement 30 vorgesehen, das mehrteilig aufgebaut ist und sowohl eine Rotation des Roboterarms 10 um den Winkel R wie auch eine Längsbewegung entlang der Achse A ermöglicht.

Das in Fig. 2 dargestellte Dichtelement 30 weist einen Dichtflansch 32 auf, der fest, das heißt nicht verdrehbar am Roboterarm 10 im Bereich der Stufe 11 befestigt ist. Der Dichtflansch 32 ist mit einer Dichthülse 34 drehbar verbunden, die sich von der Außenseite der Kammerwand 14 bis in das Innere der Arbeitskammer 12 erstreckt. Die Dichthülse 34 weist insgesamt drei verschieden große Außendurchmesser auf, wobei sich der größte Außendurchmesser 35 außerhalb der Arbeitskammer 12 befindet. Dieser größte Außendurchmesser 35 geht über einen gestuften Abschnitt, der einen Ringsteg 33 bildet, in einen Bereich mit mittleren Außendurchmesser über, der etwa dem Innendurchmesser der Zugangsöffnung 16 entspricht, wobei dieser Abschnitt 36 mit mittlerem Außendurchmesser sich bereits bis in das Innere der Arbeitskammer 12 erstreckt. Über einen weiteren gestuften Abschnitt schließt sich ein weiterer Bereich mit dem kleinsten Außendurchmesser 37 an.

Durch den Dichtflansch 32 ist somit ein Hohlraum 38 zwischen Dichtflansch und Roboterarm 10 gebildet, wobei in diesem Hohlraum am Roboterarm 10 mehrere Gummilamellen 39 mit verschiedenen Außendurchmessern angeordnet sind, die an den Innendurchmesser der Dichthülse 34 angepasst sind. Hierdurch ergibt sich insgesamt eine Labyrinthdichtung. Für Strahlmittel, das dennoch in den Hohlraum 38 innerhalb der Dichthülse 34 eingedrungen ist, sind an der Unterseite der Dichthülse 34 mehrere Ablauföffnungen 31 vorgesehen, die einen Austritt von Strahlmittel aus dem Hohlraum 38 in das Innere der Arbeitskammer ermöglichen.

Die beiden Teile 32 und 36 des in Fig. 2 dargestellten Dichtelements, das heißt der Dichtflansch 32 und die Dichthülse 36 sind über Druckfedern 40 gegeneinander vorgespannt. Gleichzeitig bildet die Dichthülse 34 an ihrem rückwärtigen Ende einen Anschlag 42, so dass diese nicht vom dem Dichtflansch 32 getrennt werden kann.

Bei der in Fig. 2 dargestellten Ausführungsform muss der Roboterarm 10 mit daran befestigtem Werkstück wiederum nur durch die Zugangsöffnung 16 in das Innere der Arbeitskammer 12 eingefahren werden, bis der Ringsteg 33 der Dichthülse 34 am Außenrand der Zugangsöffnung 16 anliegt. Anschließend wird der Roboterarm 10 mit einer vorbestimmten Mindestanpresskraft gegen die Kammerwand 14 gedrückt, so dass eine Abdichtung zwischen Roboterarm 10 und Kammerwand 14 gewährleistet ist.

Da die beiden Teile 32 und 34 des Dichtelements 30 relativ zueinander drehbar sind, kann der Roboterarm 10 um die Achse A entlang des Drehwinkels R verdreht werden. Darüber hinaus ist es jedoch auch möglich, den Roboterarm 10 in Richtung der Längsachse A in die Arbeitskammer hinein und aus dieser heraus zu verschieben. Wird der Roboterarm 10 in die Arbeitskammer hinein bewegt, so werden die Federn 40 komprimiert. Bei einer Rückzugsbewegung bringen die Federn 40 die erforderliche Mindestanpresskraft auf, so dass die Dichthülse 36 stets an die Kammerwand 14 angepresst wird, auch wenn sich der Roboterarm 10 aus der Arbeitskammer 12 zurückzieht. Somit ist nicht nur eine Drehung entlang des Drehwinkels R sondern auch eine Oszillation in Richtung X während des Strahlbetriebs möglich.

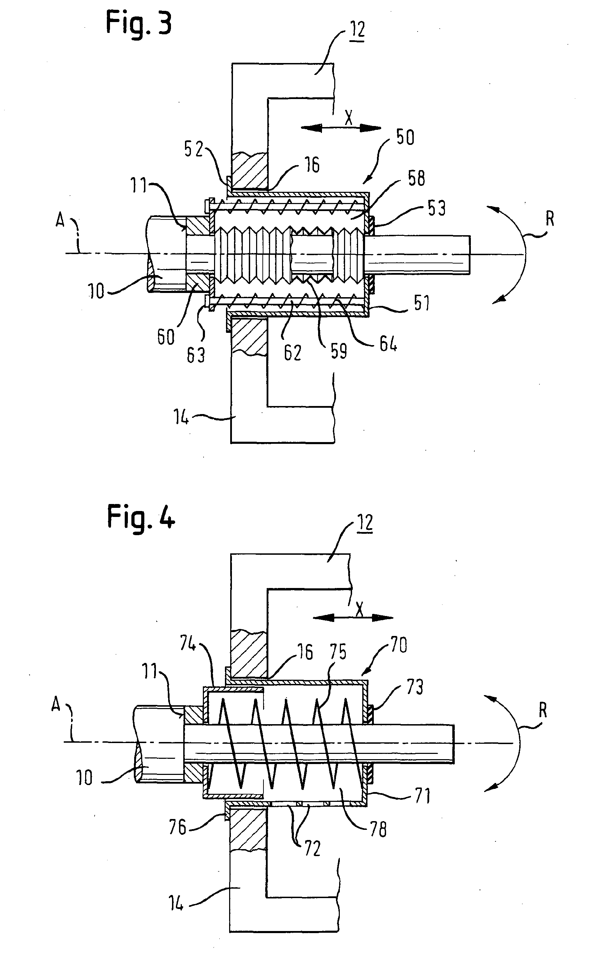

Bei der in Fig. 3 dargestellten Ausführungsform ist ebenfalls eine Drehung um den Drehwinkel R sowie eine Längsbewegung in Richtung X möglich, wenn sich der Roboterarm 10 abgedichtet innerhalb der Arbeitskammer 12 befindet.

Bei dieser Ausführungsform ist ein Dichtelement 50 vorgesehen, das eine Dichthülse 51 aufweist, die drehbar am Roboterarm 10 befestigt ist. Die Dichthülse 51 ist topfartig ausgebildet und weist an ihrem rückwärtigen Ende einen nach außen vorragenden Flanschabschnitt 52 auf, mit dem die Dichthülse 51 dichtend am Rand der Zugangsöffnung 16 der Kammerwand 14 angelegt werden kann. Im Bereich der vorderseitigen Austrittsöffnung für den Roboterarm 10 ist an der Stirnseite der Dichthülse 51 ein Abstreifgummi 53 befestigt, durch den der Roboterarm 10 gesteckt ist, der für eine weitere Abdichtung sorgt.

An der Stufe 11 des Roboterarms 10 ist eine Halteeinheit 60 drehbar gelagert, an der mehrere sich parallel zur Achse A des Roboterarms 10 erstreckende Führungssäulen 62 befestigt sind. Die Führungssäulen 62 sind relativ zu der Halteeinheit 60 entlang der Achse A verschiebbar und weisen an ihrem rückwärtigen Ende einen Endanschlag 63 auf. Zwischen der Halteeinheit 60 und dem inneren, vorderen Ende der Dichthülse 51 sind mehrere Federn 64 vorgesehen, welche die Dichthülse 51 relativ zum Roboterarm 10 vorspannen.

Im Inneren des durch die Dichthülse 51 gebildeten Hohlraums 58 ist der Roboterarm 10 mit einem zusätzlichen Gummibalg 59 für eine Abdichtung versehen.

Bei der in Fig. 3 dargestellten Ausführungsform ist es wiederum ausreichend, wenn der Roboterarm 10 mit daran befestigtem Werkstück vor einem Strahlvorgang in das Innere der Arbeitskammer 12 eingeführt wird, bis der Flanschabschnitt 52 der Dichthülse 51 am Außenumfang der Zugangsöffnung 16 dichtend anliegt. Anschließend wird der Roboterarm 10 mit einer Mindestanpresskraft gegen die Kammerwand 14 gedrückt, so dass der abdichtende Eingriff erhalten bleibt. In diesem Zustand ist eine Rotation um die Achse A entlang des Drehwinkels R möglich. Außerdem kann der Roboterarm 10 auch in Richtung X entlang der Achse A verfahren werden. Wenn sich der Roboterarm 10 aus der in Fig. 3 dargestellten Stellung weiter nach rechts bewegt, werden die Federn 64 zusammengedrückt und die Führungssäulen 62 bewegen sich nach hinten aus der Halteeinheit 60 hinaus. Hierdurch ist es möglich, dass der Roboterarm 10 abgedichtet um einen Abstand in das Innere der Arbeitskammer 12 hineingeschoben wird, der in etwa der Tiefe der Dichthülse 51 entspricht. Wird der Roboterarm 10 anschließend entlang der Achse A aus der Arbeitskammer 12 zurückgezogen, bleibt der dichtende Eingriff zwischen der Dichthülse 51 in der Kammerwand 14 aufgrund der Kraft der Federn 64 stets erhalten.

Bei dem in Fig. 4 dargestellten Ausführungsbeispiel weist das Dichtelement 70 eine Dichthülse 71 auf, die im Wesentlichen der Dichthülse 51 von Fig. 3 entspricht, wobei jedoch an der Unterseite der Dichthülse 71 schlitzartige Austrittsöffnungen 72 zum Austritt von Strahlmittel vorgesehen sind. An der vorderen, äußeren Stirnseite der Dichthülse 71 ist wiederum ein Abstreifgummi 73 befestigt, der für eine Abdichtung gegenüber dem Roboterarm 10 sorgt. Bei dieser Ausführungsform ist im Bereich der Stufe 11 eine zweite Dichthülse 74 vorgesehen, die ebenfalls topfartig ausgebildet ist und die einen etwas kleineren Außendurchmesser aufweist, als der Innendurchmesser der Dichthülse 71 beträgt, so dass beide Hülsen ineinander gesteckt werden können. Zwischen dem Boden der Dichthülse 74 und dem Boden der Dichthülse 71 ist eine Feder 75 vorgesehen, die beide Hülsen gegeneinander vorspannt.

Auch bei dieser Ausführungsform ist sowohl eine Rotation um die Achse A entlang des Winkels R wie auch eine Längsverschiebung in Richtung X möglich, wobei eine Abdichtung zwischen Roboterarm 10 und Gehäusewand 14 aufrechterhalten bleibt. Wird der Roboterarm 10 aus der in Fig. 4 dargestellten Position weiter nach rechts verschoben, so wird die Feder 75 komprimiert und die Dichthülse 74 dringt weiter in das Innere der Dichthülse 71 ein. Bei einer Rückzugsbewegung sorgt die Feder 75 dafür, dass die Dichthülse 71 nach wie vor gegen die Kammerwand 14 angepresst wird. Erst wenn die Dichthülse 71 einen (nicht dargestellten) Anschlag an der Dichthülse 71 erreicht hat, wird die Dichthülse 71 von der Kammerwand 14 gelöst.

### Bezugszeichenliste

- 10: Roboterarm
- 11: Stufe
- 12: Arbeitskammer
- 14: Kammerwand
- 16: Zugangsöffnung
- 18: Gehäuseflansch
- 20: Dichtelement
- 30: Dichtelement
- 31: Ablauföffnungen
- 32: Dichtflansch
- 33: Ringsteg
- 34: Dichthülse
- 35: Abschnitt mit großen Durchmesser
- 36: Abschnitt mit mittlerem Durchmesser
- 37: Abschnitt mit kleinem Durchmesser
- 38: Hohlraum
- 39: Gummilamellen
- 40: Federn
- 42: Anschlag
- 50: Dichtelement
- 51: Dichthülse
- 52: Flanschabschnitt
- 53: Abstreifer
- 58: Hohlraum
- 59: Gummibalg
- 60: Halteeinheit
- 62: Führungssäulen
- 63: Endanschlag
- 64: Federn
- 70: Dichtelement
- 71: Dichthülse
- 72: Austrittsöffnung
- 73: Abstreifer
- 74: Dichthülse
- 75: Feder

- A: Längsachse des Roboterarms
- R: Rotationswinkel des Roboterarms
- X: Längsbewegung des Roboterarms

## Patentansprüche

1. Arbeitskammer für eine Strahlanlage, die mit einem Roboterarm (10) zur Manipulation eines zu strahlenden Werkstücks versehen ist, mit einer Kammerwand (14), die eine Zugangsöffnung zum Einführen des Roboterarmes (10) aufweist, wobei im Bereich der Zugangsöffnung (16) eine Dichteinrichtung vorgesehen ist, die zwischen Roboterarm (10) und Kammerwand (14) abdichtet,
**dadurch gekennzeichnet, dass**
an dem Roboterarm (10) ein Dichtelement (20, 30, 50, 70) befestigt ist, das um die Längsachse (A) des Roboterarmes (10) drehbar ist und das bei in die Arbeitskammer eingeführtem Roboterarm (10) zwischen diesem und der Kammerwand (14) abdichtet.

2. Arbeitskammer nach Anspruch 1,
**dadurch gekennzeichnet, dass**
das Dichtelement (20, 30, 50, 70) alleine durch Anpressen des Roboterarmes (10) gegen die Kammerwand (14) in einen dichtenden Eingriff mit der Kammerwand (14) bringbar ist.

3. Arbeitskammer nach Anspruch 1,
**dadurch gekennzeichnet, dass**
auch an der Kammerwand (14) ein weiteres Dichtelement vorgesehen ist.

4. Arbeitskammer nach Anspruch 1,
**dadurch gekennzeichnet, dass**
das Dichtelement (30, 50, 70) zwei Teile aufweist, von denen eines fest am Roboterarm befestigt ist, und das andere relativ zu dem einen um die Längsachse des Roboterarmes (10) drehbar ist.

5. Arbeitskammer nach Anspruch 1,
**dadurch gekennzeichnet, dass**
sich das Dichtelement (30, 50, 70) bei in die Arbeitskammer (12) eingeführtem Roboterarm (10) bis in das Innere der Arbeitskammer (12) erstreckt.

6. Arbeitskammer nach Anspruch 1,
**dadurch gekennzeichnet, dass**
das Dichtelement (30, 50, 70) zwei Teile aufweist, die ineinander schiebbar sind.

7. Arbeitskammer nach Anspruch 1,
**dadurch gekennzeichnet, dass**
das Dichtelement (30, 70) einen Hohlraum (38, 78) aufweist, der mit Ablauföffnungen (31, 72) für Strahlmittel versehen ist.

8. Arbeitskammer nach Anspruch 1,
**dadurch gekennzeichnet, dass**
das Dichtelement (30, 50, 70) einen Ringsteg (33, 52, 76) aufweist, der mit dem Außenumfang der Zugangsöffnung in Eingriff bringbar ist.

9. Arbeitskammer nach Anspruch 1,
**dadurch gekennzeichnet, dass**
zumindest ein Teil (34, 51, 71) des Dichtelementes, wenn das Dichtelement von dem Roboterarm (10) gegen die Kammerwand angepresst ist, relativ zu dem Roboterarm (10) entlang dessen Längsachse (X) verschiebbar ist.

10. Arbeitskammer nach Anspruch 1,
**dadurch gekennzeichnet, dass**
das Dichtelement (50, 70) gegen die Kraft einer Feder (64, 75) in Richtung der Längsachse (X) des Roboterarms (10) bewegbar ist.

11. Arbeitskammer nach Anspruch 1,
**dadurch gekennzeichnet, dass**
der Roboterarm (10) innerhalb des Dichtelementes durch eine zusätzliche Dichtung, insbesondere einen Gummibalg (59), geschützt ist.

12. Arbeitskammer nach Anspruch 1,
**dadurch gekennzeichnet, dass**
an der zur Arbeitskammer gerichteten Seite des Dichtelementes ein Abstreifelement (53, 73) angeordnet ist.

13. Verfahren zum Abdichten zwischen einer Kammerwand einer Arbeitskammer für eine Strahlanlage, insbesondere nach einem der vorstehenden Ansprüche, und einem in die Arbeitskammer durch eine Zugangsöffnung eingeführten Roboterarm, wobei an dem Roboterarm oder an der Kammerwand ein Dichtelement befestigt ist,
**dadurch gekennzeichnet, dass**
zu jedem Zeitpunkt während eines Strahlvorganges entweder der Roboterarm mit einer festgelegten Mindestanpresskraft gegen das Dichtelement gedrückt wird, oder das Dichtelement von dem Roboterarm mit dieser Mindestanpresskraft gegen die Kammerwand gedrückt wird, um eine Abdichtung zwischen Kammerwand und Roboterarm zu erzielen.

14. Verfahren nach Anspruch 13,
**dadurch gekennzeichnet, dass**
der Roboterarm während des Strahlvorganges um seine Längsachse gedreht und/oder entlang seiner Längsachse bewegt wird.

15. Verfahren nach Anspruch 13,
**dadurch gekennzeichnet, dass**
die Mindestanpresskraft zumindest teilweise durch die Kraft einer Feder aufgebracht wird.
